# EUROPEAN PATENT SPECIFICATION

(11) **EP 2 710 076 B1**
(45) Date of publication and mention of the grant of the patent: **06.06.2018**
(21) Application number: 12720304.0
(22) Date of filing: 11.04.2012
(51) Int. Cl.: C08L 67/04

(54) **BIOLOGICALLY DEGRADABLE POLYMERIC COMPOSITION WITH HIGH DEFORMABILITY**
BIOLOGISCH ABBAUBARE POLYMERZUSAMMENSETZUNG MIT HOHER VERFORMBARKEIT
COMPOSITION POLYMÈRE BIODÉGRADABLE DOTÉE D'UNE APTITUDE À LA DÉFORMABILITÉ ÉLEVÉE

(30) Priority: 11.04.2011 SK 262011
(43) Date of publication of application: 26.03.2014
(73) Proprietor: Ústav Polymérov Sav, 842 36 Bratislava (SK)
(72) Inventor: ALEXY, Pavol, 902 01 Pezinok (SK); CHODÁK, Ivan, 841 01 Bratislava (SK); BAKOS, Dusan, 841 03 Bratislava (SK); BUGAJ, Peter, 972 23 Dolné Vestenice (SK); PAVLACKOVÁ, Miroslava, 018 41 Dubnica nad Váhom (SK); TOMANOVÁ, Katarina, 020 01 Púchov (SK); BENOVIC , Frantisek, 9189 03 Horné Oresany 360 (SK); PLAVEC, Roderik, 946 03 Kolárovo (SK); MIHALÍK, Michal, 966 61 Hodusa - Hámre (SK); BOTOSOVÁ, Monika, 980 32 Blhová 269 (SK)
(86) International application number: PCT/SK2012/000004
(87) International publication number: WO 2012/141660

(56) References cited:
- WO-A1-2007/095712

## Description

### Technical field

The presented invention refers to biologically degradable polymer - based composition with improved properties. The composition is based on polymer blend of polyhydroxybutyrate and polylactic acid, plasticized with an appropriate plasticizer, with addition of flexibilizing compatibilizer, characterized by improved properties, especially high toughness and is suitable for application in packagings production.

### Background of the art

During the last twenty years rising interest is observed in polymers from renewable resources, especially since they are ecologically friendly regarding application in agriculture, and in packagings but also referring to limited sources of crude oil. Among these polymers with growing application, polylactic acid (PLA) or polylactide are of particular interest since it is produced from agricultural products and is easily biodegradable. Lactide is a cyclic dimer prepared from butyric acid which is produced by fermentation of starch or sugar from various sources (L. Yuet al/Prog. Polym. Sci. 31, 576-602; 2006). PLA is known for many years but only recently technological procedures for the production of the monomer reached a stage to be acceptable also from economic point of view. This improvement has triggered steep development of the application of biodegradable plastics (Y. Tokiwa et al., Int. J. Mol. Sci., 10, 3722-3742; 2009).

A special group of natural polyesters is produced by a number of microorganisms, utilizing the polyesters as a source of carbon and energy. Poly-β-hydroxybutyrate (PHB) was described in scientific literature already in the beginning of the last century, considered to be more a peculiarity than a really useful polymer. The increasing concern regarding ecological aspects of plastics application resulted in an intensive research followed by commercialization of PHB. The brittleness of PHB, as the main disadvantage concerning physical properties, was treated by copolymerization of β-hydroxybutyrate with β-hydroxyvalerate (Holmes et al./ EP 0052459; 1982). Standard processing facilities are commonly used for processing of PHB, but limited commercial applications are related to certain technological problems. From this point of view, low thermal stability and slow crystallization kinetics seem to be the most important factors. Another limiting phenomenon is quite high price of the polymer.

Various biodegradable materials and procedures for their processing are described in scientific literature and patents. The ultimate materials often represent blends of polymeric components with suitable morphology depending on the component distribution, their dispersions and interactions between the components. Polymer blends are physical or mechanical mixtures of two or more polymers while between macromolecular chains of different polymers either only secondary intermolecular interactions exist, or the chains of different polymers are only partially cocrosslinked. Usually the polymer blends are utilized as engineering plastics applied in automotive or electrical - electronic industries. The polymer blends are in most cases formed from conventional polymers. Blends based on natural polymers usually lead to an improvement of particular ultimate properties of the virgin components. Blending is aimed to broaden the application of polymer from renewable natural resources for products with higher added value (number of biomaterials applications in medicine), while the target is a high volume application in packagings especially as special packagings for nutrients.

Both polymers mentioned above, PHB and PLA posses high strength and stiffness. They are easily processable using standard plastics technologies but the broad applications are limited due to certain ultimate properties as well as processing parameters. Among these, low thermal stability and slow crystallization are the reasons for necessity of exact adjustment of the processing conditions. Moreover, high price of the PHB is another factor limiting the broad high volume applications. Concerning mechanical properties, low ultimate deformation must be mentioned resulting in rather high brittleness and low toughness of the both polymers.

Several procedures have been published for the toughness increase. The most effective seems to be copolymerization of β-hydroxybutyrate with β-hydroxyvalerate (Holmes et al/ EP 0052459; 1982) or with higher homologs of polyhydroxyalkanoates. However, this procedure results in rather substantial increase of the price of the polymer (Organ S.J., Barham P.J. J. Mater. Sci. 26, 1368, 1991). Another option consists in an addition of plasticizer but the effect achieved is modest and insufficient without other adjustments (Billingham N.C., Henman T.J., Holmes P.A. Development in Polymer Degradation 7, chapter 7, Elesevier Sci publ. 1987). Special procedure offering a good properties is an application of calendering at temperature above RT but below melting temperature. Anyway, this procedure is applicable only for preparation of rather thin foils (Barham P.J., Keller A., J. Polymer Sci., Polym. Phys. Ed. 24, 69 1986). Thermal degradation during shaping the material can be suppressed applying extrusion of powders in solid state (Luepke T., Radusch H.J., Metzner K., Macromol. Symp. 127, 227, 1998), the process is demanding and does nor represent generally and broadly used processing technology. A simple procedure consists in a heating up the shaped material after achieving complete crystallization to temperature around 120 °C or more, however, the toughness increase is only partial since deformation at break was reported to achieve around 30 % and maximal values around 60 % were published (de Koning G.J.M., Lemstra P.J., Polymer 34, 4098, 1993).

An effective way of modification of polymeric materials consists in blending with another plastics. In this case an addition of a tough plastics to the brittle one is believed to be the right modification, while certain decrease in strength and modulus is accepted.

PLA and PHB are biodegradable polymers from renewable resources, aimed to production of ecologically friendly polymeric materials with excellent ultimate properties, especially strength and stiffness. On the other hand, the both polymers are brittle possessing small deformability. This behaviour is limiting regarding number of potential applications. Basic research on the PLA / PHB blends revealed that mechanical properties are close to additive values related to the ratio of the components in the blend. Moreover, most of these blends can not be simply mixed with the third polymer since almost always a steep decrease in the mechanical properties values is observed (T. Yokohara a M. Yamaguchi, Eur. Polym. J. 44, 677-685; 2008).

Blends of PLA with PHB and its copolymers are the topics of number of international patents. The patent WO/2007/095712 (Fernandes J., et al.) describes the environmentally degradable compositions and the mode of their preparation from PLA with PHB and its copolymers applying a plasticizer of natural origin, natural fibres and other natural fillers, thermal stabilizer, nucleating agent, compatibilizer, surfactant, and processing aids. The same inventor filed similar patent (WO/2007/095709) which has broaden the composition by adding another biodegradable polymer namely polycaprolactone, which is not based on renewable resources, but substantially broadens the application of these materials because of significant increase of toughness. The patent WO/2007/095711 by the same inventor describes biodegradable polymeric compositions and the mode of their preparation; the mixture is composed from PLA or its copolymer, plasticizer from renewable resources, nucleating agent, surfactant and thermal stabilizer.

Important knowledge is revealed in other patents. The patent (A. Mohanty, WO/2007/022080) describes the biodegradable polymeric compositions of nanocomposite structure for packagings based on polymer blends of PLA and PHB with copolymer butylen adipate with terephthalate; the blends contains modified clay particles. The composites are intended to be applied for packagings with increased barrier properties. Another patent (D. Shichen a Ch. Keunsuk, WO/2010/151872) is dealing with barrier properties against moisture by using a combination of PLA coextruded with PHB under formation of layered biaxially oriented foil, suitable for metallization of the surface. Both mentioned polymers can be modified by mixing with other polymeric components.

The application of PLA/PHB blends in medicine is a topic of several experimental papers as well as patents. Highly porous composite with hydroxyapatite is intended for application in tissue engineering. Comparing to neat PHB, significant decrease in crystallinity was achieved resulting in faster biodegradation in tissues (N. Sultana a M. Wang, J. Experim. Nanoscience 3, 121-132; 2008). The blends of PLA and PHB in the patent US 622316 B1 (authors U.J. Hänggi, E. Schecklies) are suggested for application as carriers for analytical tests substituting polystyrene.

It is seen that a number of patents exists dealing with various aspects of improvement of the blends PLA/PHB, regarding both ultimate properties (mechanical properties as well as special behaviour e.g. barrier properties) and processing parameters. Nevertheless, in no patent a substantial improvement of toughness and deformability is claimed what should result in a decrease of brittleness of the biodegradable materials based on blends of PLA and PHB if such behaviour has been achieved. The blend with improved toughness always contains the third polymeric component which is extremely tough, e.g. polycaprolactone or copolyester of adipic and terephthalic acids esterified with butandiol. The increase of toughness of PLA (not in a blend) is tackled in a patent US 2008 / 0050603 A1, where the authors J.R. Randall, K. Cink and J.C. Smith suggested to introduce a long-chain branching into PLA by reaction with an acrylate polymer or copolymer containing in average 2 to 15 free epoxy groups per molecule.

To adjust processing parameters, an application of multifunctional chain extenders is advised. For this purpose oligomers containing epoxy groups are recommended. The epoxies react with end carboxyl groups resulting in a formation of esters with higher molar mass and higher viscosity. Commercial products of this group are species of commercial name Joncryl produced by BASF. E.g. an addition of small amount of Joncryl-ADR improves rheological as well as mechanical properties of PLA (British Plastics & Rubber, Publ. Date: 01-JUN-10). Several patents describe the effect of epoxy-acrylate copolymers for various modes of PLA processing (melt, latex). J.R. Randall et al in the patent US 7566753 describes an effective and versatile method for production of branched PLA by standard process of melt processing. Only few patents are using the same principle for preparation of branched PHB or more generally PHAs. One of the few is a patent WO/2010/008445, claiming the method for preparation of branched PHB composition and its application utilizing branching due to addition of Joncryl ADR 4368-CS (styrolglycidyl methacrylate) resulting in higher strength of the PHA melt.

The presented invention is proposing a way for improvement of processing parameters and mechanical properties, especially toughness of the blends PLA/PHB. The new blend exhibits unexpected behaviour. Usually when an increased toughness of a brittle polymer is the goal, a component with high deformability is added accepting certain decrease in modulus and in many cases also strength. According to the presented invention the desired very intensive effect of the toughness increase was achieved by blending two brittle plastics. New polymeric composition is forming a material with substantially increased toughness, demonstrated especially by high degree of elongation at break. The effect is extremely pronounced when compared with each polymeric component of the blend if it is tested separately in the absence of the other component, even if properly plasticized. This behaviour, when mixing the two brittle polymers results in a formation of a tough blend, is unexpected and unique.

### Disclosure of the invention

According to the first aspect of the invention a process is described of formation of a biodegradable composition consisting of 5 to 95 wt % of polyhydroxyalkanoate and 95 to 5 wt % of polylactic acid or a polylactide, adding 2 to 67 parts of a plasticizer or a mixture of several plasticizers for 100 parts of the polymer blend.

According to second aspect of the present invention, the composition contains 0,05 to 5 wt % of a reactive additive.

Further aspect defines the plasticizers as esters of citric acid, glycerol, phosphoric acid, sebacic acid or other liquid low-molecular esters or polyesters.

According to further aspect, the reactive additive is selected from a group of chemicals such as acrylic polymers, epoxy-containing acrylic polymers, diisocyanates and the derivatives or the above mentioned, epoxydized oils, oligomeric copolymers of various monomers with glycidylmethacrylate or acrylate and other species.

### Best Mode for Carrying Out of the Invention

### Example 1

The mixture of composition given in Table 1 was prepared using a laboratory twin screw extruder at melt temperature 190 °C. The blend was extruded through a circle-shaped die, cooled in a water bath and after drying it was pelletized. The pellets were used for a preparation of 100 microns thick foils using a laboratory single screw extruder; the melt temperature was 190 °C and the extruder speed was 30 rpm (rounds per minute). From the foils, strips 15 mm wide were prepared for a measurement of tensile properties according to a standard STN ISO 527. Universal testing machine Zwick Roel was used for the tensile tests at room temperature and rate of clamp movement 50 mm / minute. From the stress - strain curve, tensile strength at break and elongation at break were determined and toughness was calculated as the integral area under the stress - strain curve. The results are shown in Table 1.

**Table 1 Composition and properties (elongation at break - εb, tensile strength at break - σb) of the prepared blends (PLA - polylactic acid, PHB - polyhydroxybutyrate, TAC - triacetine)**

| | | 1 | 2 | 3 | 4 |
|---|---|---|---|---|---|
| PLA | wt parts | 0 | 100 | 70 | 70 |
| PHB | wt parts | 100 | 0 | 30 | 30 |
| TAC | wt parts | 0 | 0 | 0 | 10 |
| εb | % | 3 | 4.2 | 25 | 326 |
| σb | MPa | 27.5 | 53 | 41.5 | 24.7 |
| toughness | au | 124 | 334 | 1556 | 12078 |

### Example 2

According to the procedure described in the Example 1, blends were prepared with composition and properties shown in Table 2

**Table 2. Composition and properties of the blends prepared.**

| | | 5 | 6 | 7 | 8 |
|---|---|---|---|---|---|
| PLA | wt parts | 90 | 90 | 95 | 5 |
| PHB | wt parts | 10 | 10 | 5 | 95 |
| TAC | wt parts | 0 | 10 | 10 | 10 |
| εb | % | 3.1 | 101 | 12 | 7 |
| σb | MPa | 57.7 | 40.5 | 45.5 | 37.5 |
| toughness | au | 268 | 6136 | 4720 | 3130 |

### Example 3

According to the procedure described in the Example 1, blends were prepared with composition and properties shown in Table 3.

**Table 3. Composition and properties of the blends prepared.**

| | | 9 | 10 |
|---|---|---|---|
| PLA | wt parts | 20 | 20 |
| PHB | wt parts | 80 | 80 |
| TAC | wt parts | 0 | 10 |
| εb | % | 15 | 270 |
| σb | MPa | 39.1 | 27.3 |
| toughness | au | 880 | 11057 |

### Example 4

According to the procedure described in the Example 1, blends were prepared with composition and properties shown in Table 4

**Table 4. Composition and properties of the blends prepared.**

| | | 11 | 12 | 13 | 14 |
|---|---|---|---|---|---|
| PLA | wt parts | 10 | 10 | 10 | 10 |
| PHB | wt parts | 90 | 90 | 90 | 90 |
| TAC | wt parts | 0 | 8 | 37 | 60 |
| εb | % | 3 | 6 | 14 | 7 |
| σb | MPa | 17 | 16.5 | 9.7 | 6.7 |
| toughness | au | 77 | 149 | 204 | 120 |

### Example 5

According to the procedure described in the Example 1, blends were prepared with composition and properties shown in Table 5.

**Table 5. Composition and properties of the blends prepared.**

| | | 15 | 16 |
|---|---|---|---|
| PLA | wt parts | 50 | 50 |
| PHB | wt parts | 50 | 50 |
| TAC | wt parts | 0 | 10 |
| εb | % | 2.8 | 300 |
| σb | MPa | 39.5 | 27.2 |
| toughness | au | 166 | 12240 |

### Example 6

According to the procedure described in the Example 1, blends were prepared with composition and properties shown in Table 6.

**Table 6. Composition and properties of the blends prepared.**

| | | 17 | 18 |
|---|---|---|---|
| PLA | wt parts | 85 | 85 |
| PHB | wt parts | 15 | 15 |
| TAC | wt parts | 0 | 10 |
| εb | % | 15 | 368 |
| σb | MPa | 58 | 29.5 |
| toughness | au | 1305 | 16284 |

### Example 7

According to the procedure described in the Example 1, blends were prepared with composition and properties shown in Table 7.

**Table 7. Composition and properties of the blends prepared.**

| | | 17 | 19 |
|---|---|---|---|
| PLA | wt parts | 85 | 85 |
| PHB | wt parts | 15 | 15 |
| triethyl citrate | wt parts | 0 | 12 |
| εb | % | 15 | 375 |
| σb | MPa | 58 | 28.2 |
| toughness | au | 1305 | 15863 |

### Example 8

According to the procedure described in the Example 1, blends were prepared with composition and properties shown in Table 8.

**Table 8. Composition and properties of the blends prepared.**

| | | 20 | 21 | 22 |
|---|---|---|---|---|
| PLA | wt parts | 85 | 85 | 85 |
| PHB | wt parts | 15 | 15 | 15 |
| Triethyl citrate | wt parts | 14 | 7 | 0 |
| TAC | wt parts | 0 | 7 | 14 |
| εb | % | 450 | 445 | 462 |
| σb | MPa | 26.9 | 27.8 | 29.1 |
| toughness | au | 18158 | 18557 | 20166 |

### Example 9

According to the procedure described in the Example 1, blends were prepared with composition and properties shown in Table 9.

**Table 9. Composition and properties of the blends prepared.**

| | | 23 | 24 | 25 | 26 |
|---|---|---|---|---|---|
| PLA | wt parts | 85 | 85 | 85 | 85 |
| PHB | wt parts | 15 | 15 | 15 | 15 |
| plasticizer | 10 wt parts | triethyl citrate | trioctyl phosphate | dibutyl sebacate | dioctyl sebacate |
| εb | % | 460 | 472 | 410 | 453 |
| σb | MPa | 25 | 26,4 | 31,8 | 30,8 |
| toughness | - | 17250 | 18691 | 18557 | 20928 |

### Example 10

According to the procedure described in the Example 1, blends were prepared with composition and properties shown in Table 10.

**Table 10. Composition and properties of the blends prepared.**

| | | 1 | 2 |
|---|---|---|---|
| PLA | wt parts | 90 | 90 |
| PHB | wt parts | 10 | 10 |
| TAC | wt parts | 10 | 10 |
| Joncryl 4368 | wt parts | 0 | 2 |
| εb | % | 101 | 290 |
| σb | MPa | 40.5 | 30.4 |
| toughness | au | 6136 | 13224 |

| | | | |
|---|---|---|---|
| Joncryl - styrene - acrylate resin containing epoxy functional groups | | | |

### Example 11

According to the procedure described in the Example 1, blends were prepared with composition and properties shown in Table 11.

**Table 11. Composition and properties of the blends prepared.**

| | | 3 | 4 | 5 | 6 |
|---|---|---|---|---|---|
| PLA | wt parts | 50 | 50 | 50 | 50 |
| PHB | wt parts | 50 | 50 | 50 | 50 |
| TAC | wt parts | 10 | 10 | 10 | 10 |
| Joncryl 4368 | wt parts | 0 | 0,05 | 2 | 5 |
| εb | % | 300 | 350 | 401 | 395 |
| σb | MPa | 27.2 | 28.1 | 29.0 | 30.5 |
| toughness | au | 12240 | 14752 | 17443 | 18071 |

### Example 12

According to the procedure described in the Example 1, blends were prepared with composition and properties shown in Table 12.

**Table 12. Composition and properties of the blends prepared.**

| | | 7 | 8 | 9 | 10 | 11 | 12 |
|---|---|---|---|---|---|---|---|
| PLA | wt parts | 85 | 85 | 85 | 85 | 85 | 85 |
| PHB | wt parts | 15 | 15 | 15 | 15 | 15 | 15 |
| TAC | wt parts | 2 | 2 | 10 | 10 | 67 | 67 |
| Joncryl 4368 | wt parts | 0 | 2 | 0 | 2 | 0 | 2 |
| εb | % | 16 | 180 | 300 | 350 | 561 | 572 |
| σb | MPa | 55.2 | 49.3 | 32.4 | 29.2 | 20.8 | 21.2 |
| toughness | - | 1324 | 13311 | 14580 | 15330 | 11668 | 18189 |

### Example 13

According to the procedure described in the Example 1, blends were prepared with composition and properties shown in Table 13.

**Table 13. Composition and properties of the blends prepared.**

| | | 13 | 14 |
|---|---|---|---|
| PLA | wt parts | 85 | 85 |
| PHB | wt parts | 15 | 15 |
| TAC | wt parts | 9 | 8 |
| Epoxidized rape oil | wt parts | 1 | 2 |
| εb | % | 350 | 330 |
| σb | MPa | 35.2 | 42.8 |
| toughness | au | 18480 | 21186 |

### Example 14

According to the procedure described in the Example 1, blends were prepared with composition and properties shown in Table 14.

**Table 14. Composition and properties of the blends prepared.**

| | | 15 | 16 |
|---|---|---|---|
| PLA | wt parts | 85 | 85 |
| PHB | wt parts | 15 | 15 |
| Triethyl citrate | wt parts | 12 | 12 |
| Epoxidized rape oil | wt parts | 1 | 2 |
| εb | % | 357 | 412 |
| σb | MPa | 35 | 41.1 |
| toughness | au | 18742.5 | 25399.8 |

### Example 15

According to the procedure described in the Example 1, blends were prepared with composition and properties shown in Table 15.

**Table 15. Composition and properties of the blends prepared.**

| | | 17 | 18 | 19 | 20 | 21 |
|---|---|---|---|---|---|---|
| PLA | wt parts | 85 | 85 | 85 | 85 | 85 |
| PHB | wt parts | 15 | 15 | 15 | 15 | 15 |
| plasticizer | type | TAC | TEC | TOF | DBS | TAC/TEC |
| | wt parts | 12 | 12 | 12 | 12 | 6/6 |
| Joncryl 4368 | wt parts | 1 | 1 | 1 | 1 | 1 |
| εb | % | 356 | 318 | 371 | 307 | 354 |
| σb | MPa | 48.3 | 42.5 | 39.1 | 41.5 | 37.4 |
| toughness | au | 25792.2 | 20272.5 | 21759.15 | 19110.75 | 19859.4 |

| | | | | | | |
|---|---|---|---|---|---|---|
| TAC - triacetin, TEC -triethyl citrate, TOF - trioctyl phosphate, DBS - dibutyl sebacate | | | | | | |

### Example 16

According to the procedure described in the Example 1, blends were prepared with composition and properties shown in Table 16.

**Table 16. Composition and properties of the blends prepared.**

| | | 22 | 23 | 24 | 25 |
|---|---|---|---|---|---|
| PLA | wt parts | 85 | 85 | 85 | 85 |
| PHB | wt parts | 15 | 15 | 15 | 15 |
| additive | type | ESO | EOO | HMDI | PEGMM |
| | wt parts | 1 | 1 | 1 | 1 |
| TAC | wt parts | 12 | 12 | 12 | 12 |
| εb | % | 298 | 301 | 315 | 288 |
| σb | MPa | 41.5 | 38.2 | 44.7 | 37.9 |
| toughness | au | 18551 | 17247 | 21121 | 16373 |

| | | | | | |
|---|---|---|---|---|---|
| ESO - epoxidized soybean oil, EOO -epoxidized olive oil, HMDI - hexamethylene diisocyanate, PEGMM -polyethylene-glycidyl methacrylate - co -methacrylate | | | | | |

### Example 17

According to the procedure described in the Example 1, blends were prepared with composition and properties shown in Table 17.

**Table 17. Composition and properties of the blends prepared.**

| | | 26 | 27 | 28 | 29 |
|---|---|---|---|---|---|
| PLA | wt parts | 95 | 95 | 5 | 5 |
| PHB | wt parts | 5 | 5 | 95 | 95 |
| TAC | wt parts | 10 | 10 | 10 | 10 |
| Joncryl 4368 | wt parts | 0 | 2 | 0 | 2 |
| εb | % | 358 | 392 | 180 | 220 |
| σb | MPa | 47.5 | 49.9 | 28.1 | 30.5 |
| toughness | au | 25507 | 29341 | 5058 | 10065 |

### Industrial applicability

The blends are intended to be applied in all application where combination of biodegradability and high toughness is required, especially in packagings.

## Claims

1. Biologically degradable polymeric composition **characterized in that** the content of polyhydroxyalkanoate is from 5 to 95 wt % and the content of polylactic acid or polylactide is from 95 to 5 wt % and containing 2 to 67 parts of plasticizer or a mixture of plasticizers per 100 parts of the polymer blend and containing from 0.05 to 5 parts of reactive additive per 100 parts of the polymer blend, whereby plasticizers are esters of citric acid, glycerol, phosphoric acid, sebacic acid, or other liquid organic low-molecular esters and the reactive additive is selected from a group of chemicals such as acrylic polymers, epoxidized acrylic polymers, diisocyanates and their derivatives, epoxidized oils, oligomeric copolymers of various monomers with glycidyl methacrylate and others.

## Patentansprüche

1. Biologisch abbaubare Polymerzusammensetzung, **dadurch gekennzeichnet, dass** der Gehalt an Polyhydroxyalkanoat 5 bis 95 Gew .-% ist und der Gehalt an Polymilchsäure oder Polylactid 95 bis 5 Gew .-% ist und sie 2 bis 67 Teile eines Weichmachers oder einer Mischung von Weichmachern pro 100 Teile der Polymermischung enthält und 0,05 bis 5 Teile des reaktiven Additivs pro 100 Teile der Polymermischung enthält, wobei Weichmacher Ester der Zitronensäure, Glycerin, Phosphorsäure, Sebacinsäure oder andere flüssige organische niedermolekulare Ester sind und das reaktive Additiv von der Gruppe von Chemikalien wie Acrylpolymeren, epoxidierten Acrylpolymeren, Diisocyanaten und ihren Derivaten, epoxidierten Ölen, oligomeren Copolymeren von verschiedenen Monomeren mit Glycidylmethacrylat und anderen ausgewählt ist.

## Revendications

1. Composition polymère biologiquement dégradable **caractérisée en ce que** la proportion du polyhydroxyalcanoate est comprise entre 5 et 95 wt % et la proportion de l'acide polylactique ou polylactide est comprise entre 95 et 5 wt % avec un contenu de 2 à 67 parties de plastifiant ou mélange de plastifiant toutes les 100 parties de mélange polymère et avec un contenu de 0,05 a 5 parties d'additif réactif toutes les 100 parties de mélange polymère, où les plastifiants sont des esters d'acide citrique, glycérol, acide phosphorique, acide sébacique ou d'autres esters liquides organiques à charge moléculaire faible et l'additif réactif est sélectionné dans un groupe de substances chimiques comme les polymères acryliques, polymères acryliques époxydés, diisocyanates et leurs dérivés, huiles époxydées, copolymères oligomériques de différents monomères avec méthacrylate de glycidyle et d'autres.
